# EUROPÄISCHE PATENTANMELDUNG

(11) **EP 1 048 454 A1**
(43) Veröffentlichungstag der Anmeldung: **02.11.2000**
(21) Anmeldenummer: 99810358.4
(22) Anmeldetag: 28.04.1999
(51) Int. Cl.: B32B 27/36, B32B 27/06, C23C 14/10, B65D 65/40

(54) **Folienverbund für Verpackungszwecke**

(71) Anmelder: Alusuisse Technology & Management AG, 8212 Neuhausen am Rheinfall (CH)
(72) Erfinder: Gerber, Manfred, 78224 Singen (DE); Nägeli, Hans R., 8212 Neuhausen (CH); Bossel, Daniel, 8200 Schaffhausen (CH); Jud, Wilfried, 78224 Singen (DE)

(57) **Zusammenfassung**

Ein schichtförmiger, aus Kunststoffschichten aufgebauter Folienverbund für Verpackungszwecke, weist eine Barriereschicht mit einer Durchtrittssperrwirkung für Wasserdampf, Aromen und Gase auf. Die Barriereschicht besteht zumindest teilweise aus einem Flüssigkristallpolymer (liquid crystal polymer, LCP).

## Beschreibung

Die Erfindung betrifft einen schichtförmigen, aus Kunststoffschichten aufgebauten Folienverbund für Verpackungszwecke, mit einer eine Durchtrittssperrwirkung für Wasserdampf, Aromen und Gase aufweisenden Barriereschicht.

Die heute bekannten und in Folienverbunden zur Verpackung von Lebensmitteln eingesetzten Kunststoffschichten bilden ohne zusätzliche Beschichtung mit beispielsweise keramischen Materialien oftmals eine ungenügende Wasserdampf-, Sauerstoff- oder Aromabarriere. Beispiele für Verpackungsfolien mit Gasbarriere sind Polymere des Ethylvinyl-Alkohols (EVOH), Polyvinylidenchlorid (PVDC), Polyethylenterephthalat (PET) sowie Polyethylen-2,6-naphthalat (PEN).

Es ist schon festgestellt worden, dass die Barriereeigenschaften von Kunststoffen durch im Vakuumdünnschichtverfahren mittels PVD (physical vapour deposition)- oder CVD (chemical vapour deposition)-Techniken aufgebrachte keramische Beschichtungen in gewissen Fällen verbessert werden können. Als Barriereschicht vorgeschlagen wurde beispielsweise ein Folienverbund mit einer Folie aus Polyethylenterephthalat (PET) mit einer coextrudierten Schicht aus Polyethylen-2,6-naphthalat (PEN) mit einer 10 bis 200 µm dicken keramischen Schicht aus Al₂O₃ oder aus SiOₓ, wobei x eine Zahl zwischen 0.9 und 2 ist.

Der Erfindung liegt deshalb die Aufgabe zugrunde, einen Folienverbund der eingangs genannten Art zu schaffen, der gegenüber transparenten Folienlaminaten nach dem Stand der Technik verbesserte Barriereeigenschaften bezüglich Wasserdampf, Sauerstoff und Aromen aufweist.

Zur erfindungsgemässen Lösung der Aufgabe führt, dass die Barriereschicht zumindest teilweise aus einem Flüssigkristallpolymer (liquid crystal polymer, LCP) besteht.

LCP's sind beispielsweise unter dem Markennamen Vectra der Firma Hoechst bekannt. Sie zeichnen sich aus durch einen weiten Bereich mechanischer Eigenschaften, eine hohe Wärmebeständigkeit von 180°C bis über 300°C, eine extrem hohe Fliessfähigkeit aufgrund einer niedrigen Schmelzeviskosität, eine niedrige Erstarrungsschrumpfung, einen niedrigen Erstarrungskoeffizienten, eine ausgezeichnete chemische Beständigkeit und eine niedrige Wasserabsorption. Der Anwendungsbereich dieser LCP's liegt heute überwiegend in der Elektronikindustrie, wo der Werkstoff vor allem zur Herstellung präziser Spritzgussteile mit hoher Wärmebeständigkeit eingesetzt wird.

Mit der Aufnahme von LCP's in einen Folienverbund wird eine neuartige, polymere, hochwirksame Barriereschicht mit ausgezeichneter Durchtrittssperrwirkung für Wasserdampf, Aromen und Gase geschaffen.

Zur Erzielung guter Barriereeigenschaften ist es beim erfindungsgemässen Folienverbund ausreichend, wenn die Barriereschicht 2 bis 70 Mol-% LCP enthält, wobei der Rest bevorzugt ein Polyester, vorzugsweise Polyethylenterephthalat (PET), Polyethylen (PE) oder Polypropylen (PP) ist.

Die Barriereschicht weist zweckmässigerweise eine Dicke von 2 bis 100 µm auf und beträgt vorzugsweise 2 bis 20 µm, insbesondere 2 bis 10 µm. Angestrebt wird eine Dicke, die kleiner ist als etwa 5µm.

Die erfindungsgemässe Barriereschicht kann im Schichtverbund mit allen in einem Folienverbund für Verpackungszwecke verwendeten Kunststoffschichten eingesetzt werden.

Die Barriereschicht ist bevorzugt über einen Haftvermittler mit den angrenzenden Kunststoffschichten verbunden, insbesondere über eine wässrige, lösungsmittelhaltige oder -freie Lackkaschierung, eine Coextrusion, eine Heisskalandrierung, eine Metallisierung, eine Beschichtung mit keramischen Werkstoffen, einen Siegellack, oder über eine Coextrusion mit Olefinen oder Polyolefin-Copolymeren.

Ein weiterer, insbesondere zur Herstellung von fälschungssicheren Verpakkungen geeigneter Haftvermittler ist in der EP-A 0879899 beschrieben. Es handelt sich hierbei um eine Schichtfolge aus einer ersten Schicht aus einem reflektierenden Werkstoff, wenigstens einer darüberliegenden zweiten Schicht, die zumindest teilweise aus SiOₓ besteht, wobei x eine Zahl zwischen 1.5 und 2 ist und die Dicke der Schicht 50 bis 2000 nm beträgt, und wenigstens einer für sichtbares Licht halbdurchlässigen, reflektierenden weiteren Schicht aus einem Metall in einer Dicke von 0.2 bis 60 nm. Auf einen Folienverbund mit einer derartigen Haftvermittlerschicht auftreffendes und reflektiertes Licht wird je nach Betrachtungsrichtung und/oder -winkel in unterschiedlichen Farben wahrgenommen. Die erste, reflektierende Schicht ist insbesondere eine Metallschicht, die vorzugsweise Aluminium, Chrom, Nickel, Gold oder Silber in reiner Form, als Mischungen oder Legierungen enthält. Die halbdurchlässige reflektierende Schicht aus Metall besteht bevorzugt aus Edelstahl, Nickel, Aluminium, Kupfer, Silber, Gold oder Chrom, wobei Chrom bevorzugt wird.

Neben der Barriereschicht im erfindungsgemässen Folienverbund bevorzugt eingesetzte Kunststoffschichten sind Polyolefine, Polyolefin-Copolymere und Polyolefin-lonomere, Polyethylen (PE), Polypropylen (PP), ggf. orientiert und mono- oder biaxial verstreckt, Polyamid (PA), ggf. orientiert, Polyethylenterephthalat (PET), ggf. orientiert, Polyethylen-2,6-naphthalat (PEN), Polyacrylnitil (PAN), Polystyrol (PS), Polyvinylchlorid (PVC) oder Heisssiegellack. Die genannten Kunststoffschichten können beliebig kombiniert werden, beispielsweise auch in Kombination mit einer Papierschicht.

Ein bevorzugter Anwendungsbereich des erfindungsgemässen Folienverbundes liegt bei Verpackungen in der Form von Beuteln, Tuben, Blisterpackungen, Streifenpackungen und flexiblen Behälterdeckeln.

Weitere Vorteile, Merkmale und Einzelheiten der Erfindung ergeben sich aus der nachfolgenden Beschreibung bevorzugter Ausführungsbeispiele.

Tabelle 1 zeigt die Barriereeigenschaften der erfindungsgemässen LCP-Barriereschicht im Vergleich zu Barriereschichten nach dem Stand der Technik für Sauerstoff und Wasserdampf. Die Ergebnisse zeigen deutlich die Überlegenheit von LCP gegenüber den bisher verwendeten Kunststoffen.

**Tabelle 1:**

| **Barriereeigenschaften** | | |
|---|---|---|
| | Sauerstoff [cm³ · µm/m² · d] bei 23°C, 100% RH | Wasserdampf [g · µm/m² · d] bei 38°C, 100% RH |
| LCP | 2.7-7.9 | 1.6 - 3.9 |
| PVDC * | 11.8 - 185.2 | 31.5 - 63 |
| EVOH ** | 11.8 - 122.1 | 591 |
| PEN | 169 | 78.8 |

| | | |
|---|---|---|
| * abhängig vom Grad | | |
| ** 20°C, 85 - 100%RH | | |

Die nachfolgend angeführten Anwendungsbeispiele für den erfindungsgemässen Folienverbund beziehen sich jeweils auf einen Schichtverbund mit einer LCP-Barriereschicht, die beidseitig mit wenigstens je einer Kunststoffschicht versehen ist. Hierbei ist jeweils eine der beiden beschichteten Seiten der Barriereschicht in der späteren Verpackung nach aussen, d.h. gegen die Atmosphäre, die andere Seite nach innen, d.h. gegen das spätere Füllgut gerichtet. Diese beiden Schichtaufbauten werden nachfolgend mit "aussen" bzw. "innen" bezeichnet. In allen genannten Anwendungen ist die LCP-Barriereschicht, wie vorstehend beschrieben, über einen Haftvermittler mit den angrenzenden Kunststoffschichten verbunden.

### Beispiel 1

Ein zur Verwendung bei Beuteln geeigneter Folienverbund weist den folgenden Aufbau auf.

**Aussen:**
orientiertes Polypropylen (oPP)
oPP, monoaxial verstreckt
Papier (30 bis 80 g)
orientiertes Polyamid (oPA)
orientiertes Polyethylenterephthalat (oPET)

**Innen:**
Polyolefin
Polyelefin-lonomer
Polyolefin-Copolymer
Heisssiegellack, 2 bis 20 µm
Polypropylen (PP)
Polyamid (PA) / Polyethylen (PE)
Polyamid (PA) / Polypropylen (PP)
Kaltsiegelschicht

Die Schichten aus oPET und PP werden vor allem dann eingesetzt, wenn der Beutel sterilisierfähig sein muss.

Die Dicke der Aussenseite liegt bei 10 bis 40 µm, diejenige der Innenseite bei 10 bis 60 µm.

### Beispiel 2

Ein zur Verwendung bei Tuben geeigneter Folienverbund weist den folgenden Aufbau auf.

**Aussen:**
Polyethylen-2,6-naphthalat (PEN)
Polyolefin-Copolymer
Polyolefin-lonomer
Polyamid (PA)
Polyacrylnitril (PAN)
Polyethylenterephthalat (PET)
Polypropylen (PP)
Polyethylen (PE, low, medium, high density)

**Innen:**
Polyethylen (PE, low, medium, high density)
Polypropylen (PP), 10 bis 200 µm
Polyethylenterephthalat (PET), 40 bis 70 µm
Polyacrylnitril (PAN)
Polyamid (PA)
Polyolefin-lonomer
Polyolefin-Copolymer
Polyethylen-2,6-naphthalat (PEN)

Die Dicke der Aussenseite liegt bei 50 bis 200 µm, bevorzugt bei 70 bis 150 µm, diejenige der Innenseite bei 10 bis 200 µm, bevorzugt bei 40 bis 70 µm.

Ein für Tuben verwendeter Folienverbund weist üblicherweise 5 bis 9 asymmetrisch angeordnete Schichten auf.

### Beispiel 3

Ein zur Verwendung bei Pharmablistern geeigneter Folienverbund weist den folgenden Aufbau auf.

**Aussen:**
Polyamid (PA)
Polyacrylnitril (PAN)
Polyethylenterephthalat (PET) / Polyethylen-2,6-naphthalat (PEN)
Polypropylen (PP)
Polyethylen (PE, low, medium, high density)
Polystarol (PS)
Cyclo-Olefin- Copolymer (COC)

**Innen:**
Heisssiegellack, 2 bis 20 µm
Polyethylen (PE)
Polypropylen (PP)
Polyethylenterephthalat (PET)
Polyvinylchlorid (PVC)
Polyolefin-Copolymer
Polyethylen-2,6-naphthalat (PEN)
Polyolefin-lonomer
Cyclo-Olefin-Copolymer (COC)

Die Dicke der Aussenseite liegt bei 10 bis 300 µm, vorzugsweise bei 20 bis 100 µm, diejenige der Innenseite bei 10 bis 300 µm, vorzugsweise bei 20 bis 100 µm. Ein Pharmablister weist beispielsweise 4 bis 7 Schichten auf.

### Beispiel 4

Ein zur Verwendung bei Streifenpackungen geeigneter Folienverbund weist den folgenden Aufbau auf.

**Aussen:**
orientiertes Polypropylen (oPP)
orientiertes Polypropylen (oPP), monoaxial verstreckt
Papier (30 bis 80 g)
orientiertes Polyamid (oPA)
orientiertes Polyethylenterephthalat (oPET)

**Innen:**
Polyolefin
Polyolefin-lonomer
Polyolefin-Copolymer
Heisssiegellack, 2 bis 20 µm

Die Dicke der Aussenseite liegt bei 10 bis 40 µm, diejenige der Innenseite bei 10 bis 60 µm.

### Beispiel 5

Ein zur Verwendung bei flexiblen Behälterdeckeln geeigneter Folienverbund weist den folgenden Aufbau auf.

**Aussen:**
Schutzlack, 1 bis 10 µm
orientiertes Polyamid (oPA)
orientiertes Polypropylen (oPP)
Polystyrol (PS)
orientiertes Polyethylenterephthalat (oPET)
Papier, 30 bis 80 g

**Innen:**
Heisssiegellack, 2 bis 20 µm
Polystyrol (PS)
Polyolefin
Polyolefin-lonomer
Polyacrylnitril (PAN)
Polyethylenterephthalat (PET)
Polyethylen-2,6-naphthalat (PEN)
Polyvinylchlorid (PVC)

Die Dicke der Aussenseite liegt bei 10 bis 50 µm, diejenige der Innenseite bei 10 bis 100 µm.

## Patentansprüche

1. Schichtförmiger, aus Kunststoffschichten aufgebauter Folienverbund für Verpackungszwecke, mit einer eine Durchtrittssperrwirkung für Wasserdampf, Aromen und Gase aufweisenden Barriereschicht,
dadurch gekennzeichnet, dass
die Barriereschicht zumindest teilweise aus einem Flüssigkristallpolymer (liquid crystal polymer, LCP) besteht.

2. Folienverbund nach Anspruch 1, dadurch gekennzeichnet, dass die Barriereschicht 2 bis 70 Mol-% LCP enthält.

3. Folienverbund nach Anspruch 2, dadurch gekennzeichnet, dass die Barriereschicht neben LCP Polyester, vorzugsweise Polyethylenterephthalat (PET), Polyethylen (PE) oder Polypropylen (PP) als wesentlichen Bestandteil enthält.

4. Folienverbund nach einem der Ansprüche 1 bis 3, dadurch gekennzeichnet, dass die Barriereschicht eine Dicke von 2 bis 100 µm, vorzugsweise 2 bis 20 µm, insbesondere 2 bis 10 µm, aufweist.

5. Folienverbund nach einem der Ansprüche 1 bis 4, dadurch gekennzeichnet, dass die Barriereschicht über einen Haftvermittler mit den angrenzenden Kunststoffschichten verbunden ist, insbesondere über eine wässrige, lösungsmittelhaltige oder -freie Lackkaschierung, eine Coextrusion, eine Heisskalandrierung, eine Metallisierung, eine Beschichtung mit keramischen Werkstoffen, einen Siegellack oder über eine Coextrusion mit Olefinen oder Polyolefin-Copolymeren.

6. Folienverbund nach Anspruch 5, gekennzeichnet durch einen Haftvermittler mit einer Schichtfolge aus einer ersten Schicht aus einem reflektierenden Werkstoff, wenigstens einer darüberliegenden zweiten Schicht, die zumindest teilweise aus SiOₓ besteht, wobei x eine Zahl zwischen 1.5 und 2 ist und die Dicke der Schicht 50 bis 2000 nm beträgt, und einer darüberliegenden, für sichtbares Licht halbdurchlässigen, reflektierenden weiteren Schicht aus einem Metall in einer Dicke von 0.2 bis 60 nm.

7. Folienverbund nach einem der Ansprüche 1 bis 6, dadurch gekennzeichnet, dass neben der Barriereschicht wenigstens eine weitere Kunststoffschicht vorhanden ist, ausgewählt aus den Werkstoffen Polyolefine, Polyolefin-Copolymere, Polyolefin-lonomere, Polyethylen (PE), Polypropylen (PP), ggf. orientiert und mono- oder biaxial verstreckt, Polyamid (PA), ggf. orientiert, Polyethylenterephthalat (PET), ggf. orientiert, Polyethylen-2,6-naphthalat (PEN), Polyacrylnitril (PAN), Polystyrol (PS), Cyclo-Olefin-Copolymer (COC), Polyvinylchlorid (PVC) oder Heisssiegellack.

8. Verwendung eines Folienverbundes nach einem der Ansprüche 1 bis 7 in der Form von Beuteln, Tuben, Blisterpackungen, Streifenpackungen, halbsteifen bzw. flexiblen Gehältern und/oder Behälterdeckeln.
